# EUROPEAN PATENT APPLICATION

(11) **EP 4 556 155 A1**
(43) Date of publication of application: **21.05.2025**
(21) Application number: 23869659.5
(22) Date of filing: 22.05.2023
(51) Int. Cl.: B23K 37/04, B23K 37/00

(54) **WELDING JIG AND WELDING DEVICE**

(30) Priority: 29.09.2022 CN 202211196034
(71) Applicant: Jiangsu Contemporary Amperex Technology Limited, Changzhou, Jiangsu 213300 (CN); Contemporary Amperex Technology Co., Limited, Ningde, Fujian 352100 (CN)
(72) Inventor: ZHAO, Beiming, Changzhou, Jiangsu 213300 (CN); FU, Li, Changzhou, Jiangsu 213300 (CN); ZHANG, Daowei, Changzhou, Jiangsu 213300 (CN); QIU, Dong, Changzhou, Jiangsu 213300 (CN)
(74) Representative: Thoma, Michael
(86) International application number: PCT/CN2023/095594
(87) International publication number: WO 2024/066406

(57) **Abstract**

The present application relates to a welding fixture and a welding device, which fall within the technical field of battery production. The welding fixture comprises a base, a frame positioning mechanism and a negative pressure suction mechanism, the base comprising a placement region in which a frame is placed, the frame positioning mechanism being arranged on the base and configured to position the frame, and the negative pressure suction mechanism being arranged in the placement region and configured to generate negative pressure to suck a covering member so as to press the covering member against the frame. The welding fixture according to the present application can reduce the risk of damage to the covering member, increase the yield of cases, and reduce the production cost.

## Description

### Cross-Reference to Related Application

The present application claims the priority of Chinese patent application no. 202211196034.3, entitled "WELDING FIXTURE AND WELDING DEVICE" and filed on September 29, 2022, which is incorporated herein by reference in its entirety.

### Technical Field

The present application relates to the technical field of battery production, and in particular to a welding fixture and a welding device.

### Background Art

Achieving energy conservation and emission reduction is the key to the sustainable development of the automotive industry. Electric vehicles have become an important part of the sustainable development of the automotive industry due to their advantages in energy conservation and environmental protection. For the electric vehicles, the battery technology is an important factor to their development.

A battery is composed of a case and a battery cell or a battery module accommodated in the case. The case typically comprises a frame and a covering member. When the case is to be assembled, the covering member is first welded to the frame. When the covering member is to be welded to the frame, as the covering member has an uneven structure on the surface, the uneven structure on the surface of the covering member is easy to be crushed by a pressing plate in a conventional fixing method where the covering member is pressed against the frame. For example, in the case where the covering member is a water cooling plate, as there are many bulging water channels on the water cooling plate, the water channels of the water cooling plate are easy to be crushed by the pressing plate, causing scrapping of the water cooling plate. This results in high production scrap rate and high production cost.

### Summary of the Invention

In view of the above problems, an objective of the present application is to provide a welding fixture and a welding device, which can reduce the risk of damage to a covering member.

In a first aspect, the present application provides a welding fixture configured to fix a frame and a covering member which covers a first opening of the frame, the welding fixture comprising a base, a frame positioning mechanism and a negative pressure suction mechanism, wherein the base comprises a placement region in which the frame is placed; the frame positioning mechanism is arranged on the base and configured to position the frame; and the negative pressure suction mechanism is arranged in the placement region and configured to generate negative pressure to suck the covering member so as to press the covering member against the frame.

In the technical solution of the embodiments of the present application, after the frame is fixed to the placement region by means of the frame positioning mechanism, the negative pressure suction mechanism is located on an inner side of the fixed frame, the covering member is placed on the frame, a bottom surface of the covering member is sucked by means of the negative pressure suction mechanism, the covering member is closely attached to a welding region of the frame under the action of suction force, and the suction force of the negative pressure suction mechanism can uniformly act on a surface of the covering member, thus reducing the risk of damage to the covering member due to the excessively concentrated pressure.

In some embodiments, the negative pressure suction mechanism comprises first negative pressure suction units and second negative pressure suction units, the number of the first negative pressure suction units being greater than that of the second negative pressure suction units, and the suction area of the first negative pressure suction unit being smaller than that of the second negative pressure suction unit.

In the technical solution of the embodiments of the present application, after the covering member is placed on the frame that is fixed to the placement region, the first negative pressure suction units are arranged at intervals around the center of the covering member so that the suction force from the first negative pressure suction units can act on all parts of the covering member; and the plurality of first negative pressure suction units apply smaller suction force to the covering member to allow the covering member to be in close contact with the welding region of the frame, and the second negative pressure suction units then apply larger suction force to the covering member to fix the covering member in position, thus reducing the risk of displacement of the covering member during welding.

In some embodiments, the plurality of first negative pressure suction units are arranged at intervals around the second negative pressure suction units.

In the technical solution of the embodiments of the present application, the first negative pressure suction units are closer to the covering member and the welding region of the frame than the second negative pressure suction units, and the portion of the covering member near the edge can be sucked by means of the plurality of first negative pressure suction units and pulled towards the welding region of the frame, so that the covering member is closely attached to the welding region of the frame, while the surface of the covering member that is in contact with the frame is also stressed uniformly, thus reducing the risk of partial tilt of the covering member.

In some embodiments, the first negative pressure suction unit is a bowl-shaped suction cup, and the second negative pressure suction unit is a square suction cup.

In the technical solution of the embodiments of the present application, when sucking the covering member, the bowl-shaped suction cup expels the air in the interior to reduce its own volume, so that the covering member is pulled towards the welding region of the frame to allow the covering member to be closely attached to the welding region of the frame, thus reducing the risk of partial tilt of the covering member. The square suction cup has a larger contact surface with the covering member and can provide larger suction force for the covering member, thus reducing the risk of displacement of the covering member during welding.

In some embodiments, the welding fixture further comprises a heating mechanism arranged in the placement region and configured to heat the covering member.

In the technical solution of the embodiments of the present application, after the covering member is placed on the frame, the covering member is heated by means of the heating mechanism, the covering member has volume expansion as it heats up, specifically, the edge of the covering member extends in its own width and length directions, and then the frame is welded to the volumetrically expanded covering member. After the welding is completed, the heating mechanism stops heating, and as the temperature of the covering member decreases, the covering member tends to shrink. Since the edge of the covering member has been welded to the frame, the shrinking force of the covering member acts on the central portion of the covering member to stretch the central portion of the covering member towards the edge of the covering member, so that the central portion of the covering member is flattened, thus improving the overall flatness of the covering member.

In some embodiments, the heating mechanism comprises a heating plate, which comprises an elastic insulation layer and an electric heating wire embedded in the elastic insulation layer and is configured to be attached to the covering member for heating the covering member.

In the technical solution of the embodiments of the present application, the elastic insulation layer is closely attached to the covering member in the form of surface contact, and the covering member is heated by the electric heating wire via the elastic insulation layer, so that the covering member can be heated uniformly.

In some embodiments, the elastic insulation layer is made of silica gel.

In the technical solution of the embodiments of the present application, on the one hand, silica gel is soft and not easy to scratch the covering member, and on the other hand, silica gel can deform depending on the shape of the surface of the covering member to allow itself to be completely attached to the covering member, so that the covering member can be heated uniformly.

In some embodiments, the heating mechanism comprises the plurality of heating plates arranged in the same plane and spaced apart from each other.

In the technical solution of the embodiments of the present application, when the negative pressure suction mechanism comprises the second negative pressure suction unit and the plurality of first negative pressure suction units, the plurality of heating plates are staggered with the second negative pressure suction unit and the plurality of first negative pressure suction units, so that the covering member can be heated uniformly while receiving the suction force uniformly at all parts.

In some embodiments, the heating mechanism further comprises a height-adjustable first holder arranged in the placement region and configured to support the heating plate.

In the technical solution of the embodiments of the present application, the first holder can adjust its height adapted to the frame that is fixed to the placement region, so that a top surface of the heating plate can be attached to the bottom surface of the covering member, which is convenient for the heating plate to heat the covering member.

In some embodiments, the heating mechanism further comprises a hot air blower configured to blow hot air to the covering member.

In the technical solution of the embodiments of the present application, the hot air blower can blow hot air to the surface of the covering member that is not attached to the heating plate, so that the covering member is heated and can be heated uniformly.

In some embodiments, the frame positioning mechanism comprises a first positioning mechanism comprising a positioning pin which extends in a thickness direction of the covering member and fits with a through hole in the frame to achieve positioning for the frame.

In the technical solution of the embodiments of the present application, in the process of placing the frame in the placement region, the through hole in the frame fits with the positioning pin to restrict the movement of the frame in a second direction or in a third direction so as to provide initial positioning for the frame, and then the frame comes into contact with the placement region of the base.

In some embodiments, the frame positioning mechanism comprises a second positioning mechanism comprising a pressing member and a locking member, the pressing member being rotatably connected to the base and configured to switch between a pressing position and a release position, and the locking member being configured to lock the pressing member in the pressing position to allow the pressing member to press the frame against the base.

In the technical solution of the embodiments of the present application, the pressing member is turned over to press the frame against the base to restrict the movement of the frame in the first direction and further provide positioning for the frame placed in the placement region.

In some embodiments, the frame positioning mechanism comprises a third positioning mechanism comprising an inner holding member and an outer holding member, the inner holding member being configured to press the frame from the inner periphery of the frame, and the outer holding member being configured to press the frame from the outer periphery of the frame.

In the technical solution of the embodiments of the present application, the inner holding member and the outer holding member move towards the frame so as to clamp the frame, so that the frame is fixed in the placement region in position.

In some embodiments, the covering member is a water cooling plate.

In a second aspect, the present application provides a welding device, comprising a welding fixture according to the first aspect and a welding execution unit which is configured to weld the covering member to the frame.

Some of the additional aspects and advantages of the present application will be set forth in the following description, and some will become apparent from the following description, or be learned by practice of the present application.

### Brief Description of the Drawings

In order to more clearly describe the technical solutions of embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any creative effort.
FIG. 1 is an exploded view of a welding fixture according to some embodiments of the present application;
FIG. 2 is a schematic structural diagram of a welding fixture according to some embodiments of the present application;
FIG. 3 is a top view of a welding fixture according to some embodiments of the present application;
FIG. 4 is a cross-sectional view taken along line A-A in FIG. 3 when no covering member is provided;
FIG. 5 is an enlarged view of part B in FIG. 4 when a covering member is placed;
FIG. 6 is a schematic structural diagram of a first negative pressure suction unit according to some embodiments of the present application;
FIG. 7 is a schematic structural diagram of a second negative pressure suction unit according to some embodiments of the present application;
FIG. 8 is an exploded view of a second negative pressure suction unit according to some embodiments of the present application;
FIG. 9 is a schematic structural diagram of a heating mechanism according to some embodiments of the present application;
FIG. 10 is an exploded view of a heating mechanism according to some embodiments of the present application;
FIG. 11 is a schematic structural diagram of a hot air blower and a protective cover according to some embodiments of the present application;
FIG. 12 is an exploded view of a hot air blower and a protective cover according to some embodiments of the present application;
FIG. 13 is a schematic structural diagram of a first positioning mechanism according to some embodiments of the present application;
FIG. 14 is a schematic structural diagram of a second positioning mechanism according to some embodiments of the present application;
FIG. 15 is a schematic structural diagram of an inner holding member of a third positioning mechanism according to some embodiments of the present application; and
FIG. 16 is a schematic structural diagram of an outer holding member of the third positioning mechanism according to some embodiments of the present application.

List of reference signs: 1 - frame; 10 - connecting portion; 2 - covering member; 3 - base; 4 - frame positioning mechanism; 41 - first positioning mechanism; 411- positioning pin; 412 - first mounting base; 42 - second positioning mechanism; 421 - pressing member; 422 - locking member; 43 - third positioning mechanism; 431 - inner holding member; 432 - outer holding member; 5 - negative pressure suction mechanism; 51 - first negative pressure suction unit; 52 - second negative pressure suction unit; 511 - bowl-shaped suction cup; 512 - first mounting leg; 521 - square suction cup; 522 - second mounting base; 6 - heating mechanism; 61 - heating plate; 62 - first holder; 63 - supporting member; 64 - hot air blower; 641 - second holder; 642 - air duct; 65 - protective cover; X - first direction; Y - second direction; Z - third direction.

### Detailed Description of Embodiments

In order to make the objectives, technical solutions and advantages of embodiments of the present application clearer, the technical solutions in the embodiments of the present application will be described clearly and completely below with reference to the accompanying drawings in the embodiments of the present application. Apparently, the embodiments described are some of, rather than all of, the embodiments of the present application. Based on the embodiments of the present application, all other embodiments obtained by those of ordinary skill in the art without any creative effort fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion. The terms "first", "second", etc. in the description and the claims of the present application as well as the foregoing accompanying drawings are used to distinguish between different objects, rather than describing a specific order or a primary-secondary relationship.

In the present application, the phrase "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment. Those skilled in the art should understand, in explicit and implicit manners, that an embodiment described in the present application can be combined with another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the present application, "a plurality of" means two or more (including two), similarly, "a plurality of groups" means two or more groups (including two groups), and "a plurality of pieces" means two or more pieces (including two pieces).

At present, from the perspective of the development of the market situation, traction batteries are used increasingly widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, the market demand for the traction batteries is also expanding.

A battery mentioned in the present application refers to a single physical module comprising one or more battery cells to provide a higher voltage and capacity. The battery generally comprises a case for packaging one or more battery cells. The case can prevent liquid or other foreign matter from affecting charging or discharging of the battery cell(s).

The case comprises a frame and a covering member, such as a water cooling plate, welded to the frame.

During the process of welding the covering member and the frame, in a conventional method for fixing the covering member, the covering member is pressed against a welding region of the frame by means of a pressing plate, and the covering member having an uneven structure on the surface may be deformed or even damaged when being pressed by the pressing plate. For example, in the case where the covering member is a water cooling plate, when the pressing plate is pressed against the water cooling plate, the pressing plate is pressed against a bulging water channel of the water cooling plate, and with the small contact surface between the pressing plate and the water channel of the water cooling plate, the water channel of the water cooling plate is easy to be damaged by pressing, causing scrapping of the water cooling plate, resulting in high production scrap rate and high production cost.

Based on the above considerations, in order to solve the problem in the prior art that the fixing for the covering member may cause damage to the covering member, the present application designs a welding fixture. A negative pressure suction mechanism is provided in a placement region on a base where the frame is placed. The negative pressure suction mechanism can generate negative pressure to suck the covering member towards the frame to allow the covering member to be closely attached to the frame, and the suction force generated by the negative pressure mechanism can uniformly act on the sucked surface of the covering member, thus reducing the risk of damage to the covering member, increasing the production yield, and reducing the production cost.

The welding fixture disclosed in the embodiments of the present application may be applicable to, but not limited to, a welding process for a case of a battery, and may also be applicable to a welding process for a case of other devices.

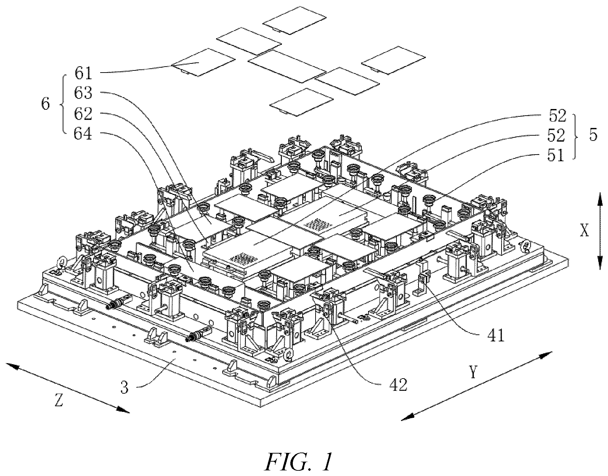

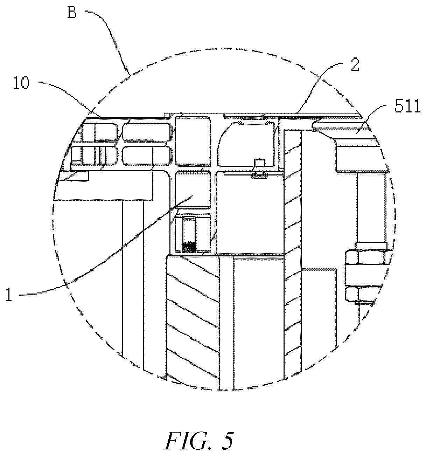

According to some embodiments of the present application, as shown in FIGS. 1 to 5, the present application provides a welding fixture configured to fix a frame 1 and a covering member 2, the covering member 2 covering a first opening of the frame 1, the welding fixture comprising a base 3, a frame positioning mechanism 4 and a negative pressure suction mechanism 5. The base 3 comprises a placement region in which the frame 1 is placed. The frame positioning mechanism 4 is arranged on the base 3 and configured to position the frame 1. The negative pressure suction mechanism 5 is arranged in the placement region and configured to generate negative pressure to suck the covering member 2 so as to press the covering member 2 against the frame 1.

The placement region may be a central region of a top surface of the base 3.

The covering member 2 may be a water cooling plate. Alternatively, the covering member 2 may be a base plate of the case. Alternatively, the surface of the covering member 2 may be provided with a groove adapted to a battery cell.

A plurality of negative pressure suction mechanisms 5 may be provided. The plurality of negative pressure suction mechanisms 5 may be arranged at intervals in the placement region, and the plurality of negative pressure suction mechanisms 5 may be arranged in a way of avoiding uneven parts of the surface of the covering member 2.

After the frame 1 is fixed in the placement region by means of the frame positioning mechanism 4, the negative pressure suction mechanism 5 is located on an inner side of the fixed frame 1, the covering member 2 is placed on the frame 1, a bottom surface of the covering member 2 is sucked by means of the negative pressure suction mechanism 5, the covering member 2 is closely attached to a welding region of the frame 1 under the action of suction force, and the suction force of the negative pressure suction mechanism 5 can uniformly act on a surface of the covering member 2, thus reducing the risk of damage to the covering member 2 due to the excessively concentrated pressure.

According to some embodiments of the present application, optionally, as shown in FIGS. 1, 2 and 4, the negative pressure suction mechanism 5 comprises first negative pressure suction units 51 and second negative pressure suction units 52, the number of the first negative pressure suction units 51 being greater than that of the second negative pressure suction units 52, and the suction area of the first negative pressure suction unit 51 being smaller than that of the second negative pressure suction unit 52.

The plurality of first negative pressure suction units 51 may be arranged around the second negative pressure suction units 52.

One second negative pressure suction unit 52 may be provided. Alternatively, a plurality of (e.g., two, three, four, or five) second negative pressure suction units 52 may be provided.

For example, in the case where the covering member 2 is a water cooling plate, the plurality of first negative pressure suction units 51 can be arranged in a way of avoiding the water channel of the water cooling plate.

After the covering member 2 is placed on the frame 1 that is fixed to the placement region, the first negative pressure suction units 51 are arranged at intervals around the center of the covering member 2 so that suction force from the first negative pressure suction units 51 can act on all parts of the covering member 2; and the plurality of first negative pressure suction units 51 apply smaller suction force to the covering member 2 to allow the covering member 2 to be in close contact with the welding region of the frame 1, and the second negative pressure suction units 52 then apply larger suction force to the covering member 2 to fix the covering member 2 in position, thus reducing the risk of displacement of the covering member 2 during welding.

According to some embodiments of the present application, optionally, as shown in FIGS. 1, 2 and 4, the plurality of first negative pressure suction units 51 are arranged at intervals around the second negative pressure suction units 52.

One second negative pressure suction unit 52 may be provided, and the second negative pressure suction unit 52 is arranged at a position directly facing the center of the covering member 2. Alternatively, a plurality of (e.g., two, three, four, or five) second negative pressure suction units 52 may be provided, and the plurality of second negative pressure suction units 52 are arranged at intervals surrounding the center of the covering member 2.

The first negative pressure suction units 51 are closer to the covering member 2 and the welding region of the frame 1 than the second negative pressure suction unit 52, and the portion of the covering member 2 near the edge can be sucked by means of the plurality of first negative pressure suction units 51 and pulled towards the welding region of the frame 1, so that the covering member 2 is closely attached to the welding region of the frame 1, while the surface of the covering member 2 that is in contact with the frame 1 is stressed uniformly, thus reducing the risk of partial tilt of the covering member 2.

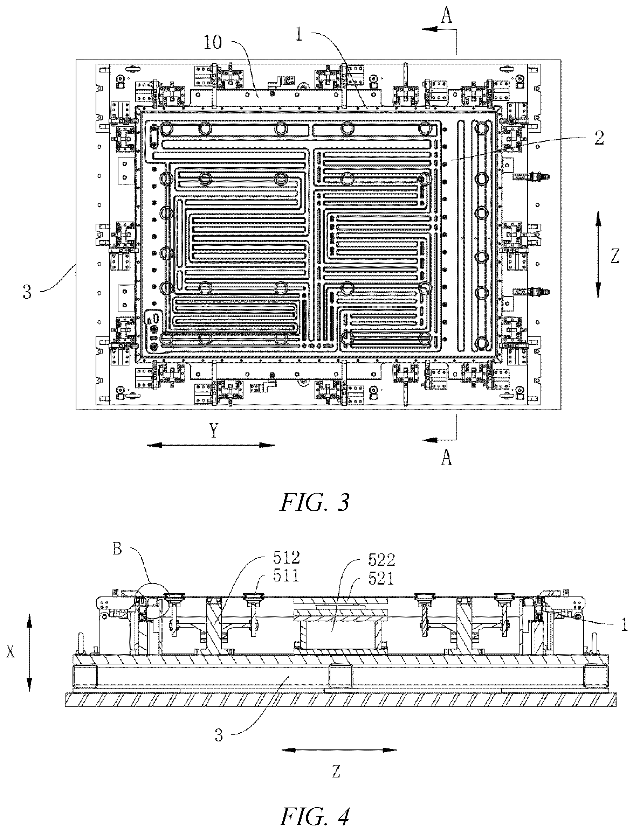

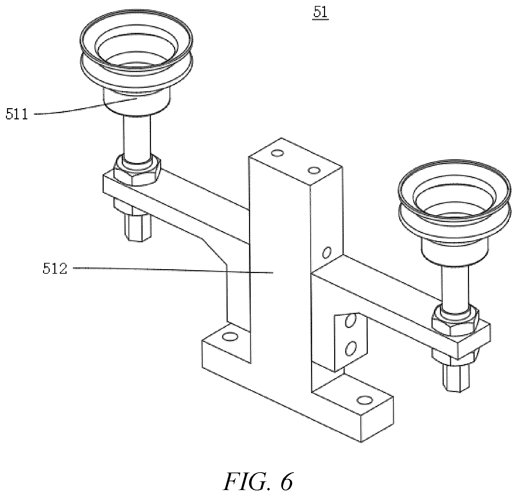

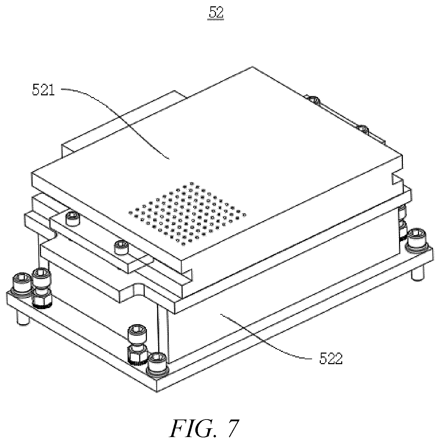

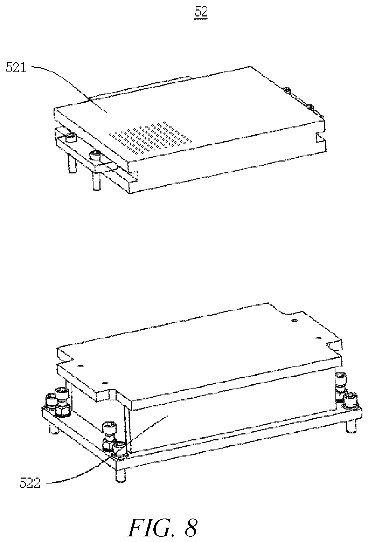

According to some embodiments of the present application, optionally, as shown in FIGS. 4 and 6 to 8, the first negative pressure suction unit 51 is a bowl-shaped suction cup 511, and the second negative pressure suction unit 52 is a square suction cup 521.

A suction cup is a component that expels the air or liquid in the interior so as to fix itself to a non-porous surface under atmospheric pressure or liquid pressure.

The bowl-shaped suction cup 511 may be made of an elastic material, and after coming into contact with the covering member 2, the bowl-shaped suction cup 511 may be deformed depending on the shape of the bottom surface of the covering member 2 to allow itself to be attached to the bottom surface of the covering member 2, thus reducing the risk of leakage of the suction force to enable the bowl-shaped suction cup 511 to stably suck the covering member 2.

The bowl-shaped suction cup 511 can be mounted in the placement region by means of a first mounting leg 512. The mounting leg may be provided with a plurality of bowl-shaped suction cups 511.

The square suction cup 521 may be made of an elastic material, and after coming into contact with the covering member 2, the square suction cup 521 may be deformed depending on the shape of the bottom surface of the covering member 2 to allow itself to be attached to the bottom surface of the covering member 2, thus reducing the risk of leakage of the suction force to enable the square suction cup 521 to stably suck the covering member 2.

The square suction cup 521 can be mounted in the placement region by means of a second mounting base 522.

When the frame 1 is fixed to the placement region of the base 3, a top surface of the bowl-shaped suction cup 511 may exceed a top surface of the frame 1. In the process of placing the covering member 2 in the frame 1, the covering member 2 comes into contact with the top surface of the bowl-shaped suction cup 511, and then the air in the interior of the bowl-shaped suction cup 511 is drawn out by means of a vacuum cylinder to form local vacuum to suck the covering member 2. After the air in the interior is drawn out, the bowl-shaped suction cup 511 shrinks to pull the covering member 2 towards the frame 1, so that the frame 1 is attached to the welding region of the frame 1, while the bottom surface of the covering member 2 comes into contact with the square suction cup 521, which is convenient for the square suction cup 521 to suck the covering member 2 to fix the covering member 2 in position.

When sucking the covering member 2, the bowl-shaped suction cup 511 expels the air in the interior to reduce its own volume, and then the covering member 2 is pulled towards the welding region of the frame 1 to allow the covering member 2 to be closely attached to the welding region of the frame 1, thus reducing the risk of partial tilt of the covering member 2. The square suction cup 521 has a larger contact surface with the covering member 2 and can provide larger suction force for the covering member 2, thus reducing the risk of displacement of the covering member 2 during welding.

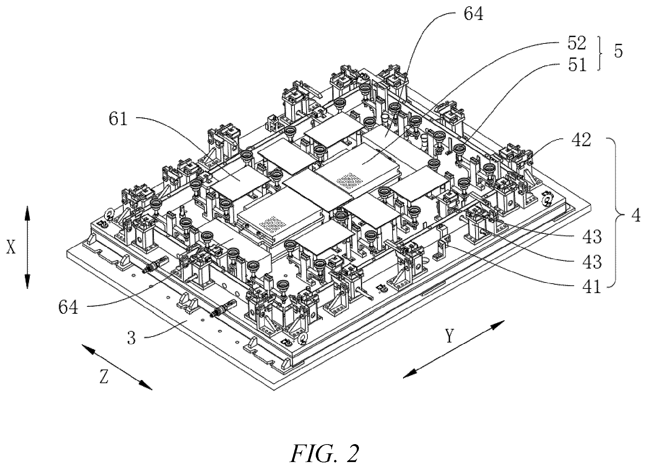

According to some embodiments of the present application, optionally, as shown in FIGS. 1 and 2, the welding fixture further comprises a heating mechanism 6. The heating mechanism 6 is arranged in the placement region and configured to heat the covering member 2.

The heating mechanism 6 is located on the inner side of the frame 1 that is fixed in the placement region, and the bottom surface of the covering member 2 faces the heating mechanism 6.

The heating mechanism 6 may comprise a heating plate 61 attached to the bottom surface of the covering member 2 and heating the covering member 2 uniformly. Alternatively, the heating mechanism 6 may comprise a heating lamp arranged at a distance from the bottom surface of the covering member 2 and heating the covering member 2 by thermal radiation.

A second direction Y as shown is a length direction of the covering member 2. A third direction Z as shown is a width direction of the covering member.

After the covering member 2 is placed on the frame 1, the covering member 2 is heated by means of the heating mechanism 6, the covering member 2 has volume expansion as it heats up, specifically, the edge of the covering member 2 extends in its own width and length directions, and then the frame 1 is welded to the volumetrically expanded covering member 2. After the welding is completed, the heating mechanism 6 stops heating, and as the temperature of the covering member 2 decreases, the covering member 2 tends to shrink. Since the edge of the covering member 2 has been welded to the frame 1, the shrinkage force of the covering member 2 acts on the central portion of the covering member 2 to stretch the central portion of the covering member 2 towards the edge of the covering member 2, so that the central portion of the covering member 2 is flattened, thus improving the overall flatness of the covering member 2.

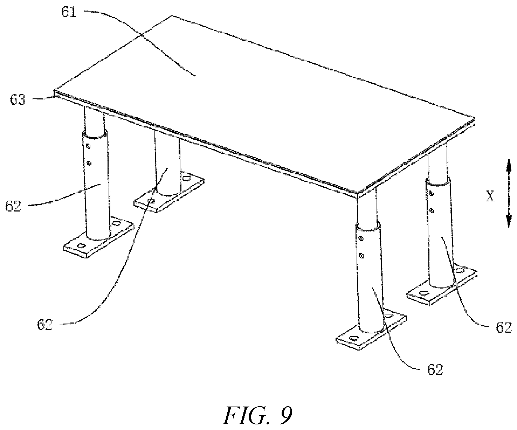

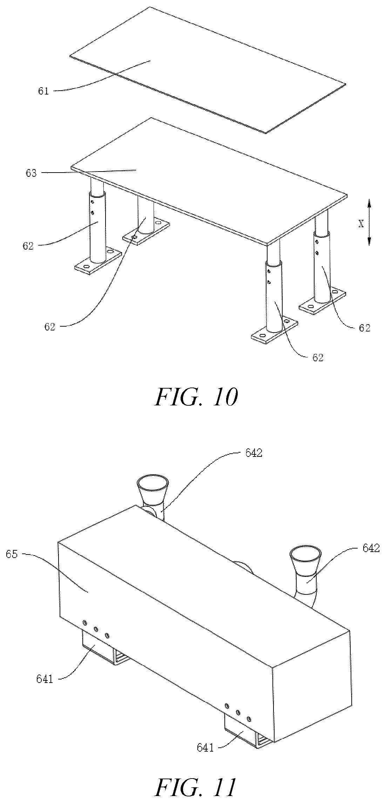

According to some embodiments of the present application, optionally, as shown in FIGS. 9 and 10, the heating mechanism 6 comprises a heating plate 61. The heating plate 61 comprises an elastic insulation layer and an electric heating wire embedded in the elastic insulation layer, and the heating plate 61 is configured to be attached to the covering member 2 for heating the covering member 2.

The material of the elastic insulation layer may be, but not limited to, engineering plastic, resin, rubber, silica gel, etc.

The elastic insulation layer is closely attached to the covering member 2 in the form of surface contact, and the covering member 2 is heated by the electric heating wire via the elastic insulation layer, so that the covering member 2 can be heated uniformly.

According to some embodiments of the present application, optionally, the elastic insulation layer is made of silica gel.

Silica gel is hydrated silica in a granular porous form, has temperature resistance and electrical insulation properties, can be used in high-temperature environments, and has a surface that is soft and easy to deform and is also smooth and not easy to stick.

On the one hand, silica gel is soft and not easy to scratch the covering member 2, and on the other hand, silica gel can deform depending on the shape of the surface of the covering member 2 to allow itself to be completely attached to the covering member 2, so that the covering member 2 can be heated uniformly.

According to some embodiments of the present application, optionally, as shown in FIGS. 1 and 2, the heating mechanism 6 comprises a plurality of heating plates 61 arranged in the same plane and spaced apart from each other.

Two, three, four, five, six, seven, or more heating plates 61 may be provided.

The plurality of heating plates 61 may be arranged surrounding the negative pressure suction mechanism 5. Alternatively, the plurality of heating plates 61 may be staggered with the plurality of first negative pressure suction units 51 and the second negative pressure suction units 52.

When the negative pressure suction mechanism 5 comprises the second negative pressure suction unit 52 and the plurality of first negative pressure suction units 51, the plurality of heating plates 61 are staggered with the second negative pressure suction unit 52 and the plurality of first negative pressure suction units 51, so that the covering member 2 can be heated uniformly while receiving the suction force uniformly at all parts.

According to some embodiments of the present application, optionally, as shown in FIGS. 9 and 10, the heating mechanism 6 further comprises a height-adjustable first holder 62. The first holder 62 is arranged in the placement region, and the first holder 62 is configured to support the heating plate 61.

The heating mechanism 6 may further comprise a supporting member 63. The supporting member 63 is supported between the heating plate 61 and the first holder 62. The supporting member 63 has a flat top surface that is attached to a bottom surface of the heating plate 61, so that the heating plate 61 can be kept flat and attached to the covering member 2.

One first holder 62 may be provided, and the first holder 62 is supported at the center of the heating plate 61. Alternatively, a plurality of first holders 62 may be provided, and the plurality of first holders 62 are arranged at intervals surrounding the center of the heating plate 61.

The first holder 62 can adjust its height adapted to the frame 1 that is fixed to the placement region, so that a top surface of the heating plate 61 can be attached to the bottom surface of the covering member 2, which is convenient for the heating plate 61 to heat the covering member 2.

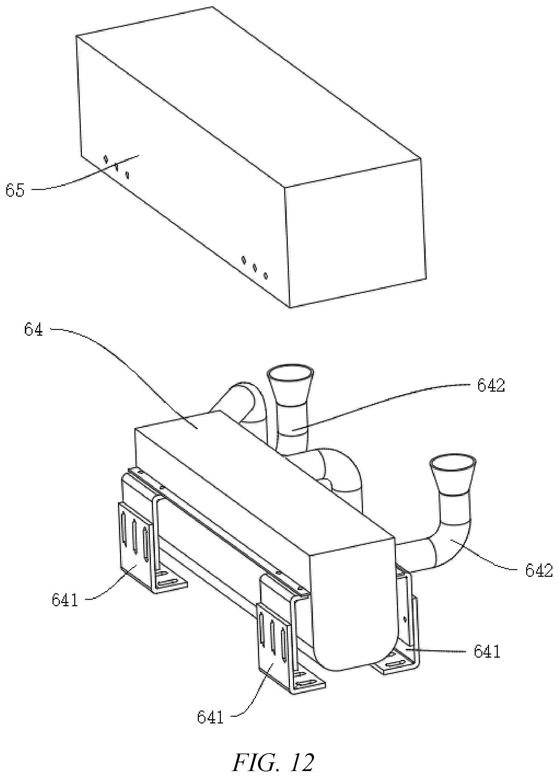

According to some embodiments of the present application, optionally, as shown in FIGS. 1, 2, 11 and 12, the heating mechanism 6 further comprises a hot air blower 64. The hot air blower 64 is configured to blow hot air to the covering member 2.

The hot air blower 64 may be mounted in the placement region by means of a plurality of second holders 641.

An output end of the hot air blower 64 may be connected to an air duct 642. The air duct 642 is configured to direct hot air towards the bottom surface of the covering member 2 for heating the covering member 2.

The heating mechanism 6 further comprises a protective cover 65. The protective cover 65 covers the outer side of the hot air blower 64 to protect the hot air blower 64.

A plurality of (e.g., two, three, four or five) hot air blowers 64 may be provided, and the plurality of hot air blowers 64 are arranged at intervals around the center of the placement region.

The hot air blowers 64 can blow hot air for heating the surface of the covering member 2 that is not attached to the heating plate 61, so that the covering member 2 can be heated uniformly.

In some embodiments, the welding fixture further comprises weld seam supporting blocks arranged in the placement region and around the heating mechanism 6 and configured to support the welding part between the covering member 2 and the frame 1. The weld seam supporting block is provided with a heat insulation layer on the side near the heating mechanism 6, and the heat insulation layer may be made of, but not limited to, heat insulation wool, polystyrene foam board, etc. The heat insulation layer can inhibit the process of heat transferred to the frame 1 and then dissipated via the frame 1, shorten the heating time of the covering member 2, reduce the energy loss of the heating mechanism 6 during heating the covering member 2, and allow the heat to be enclosed on the inner side of the frame 1 and concentrated on the covering member 2 so as to increase the heating rate of the covering member 2.

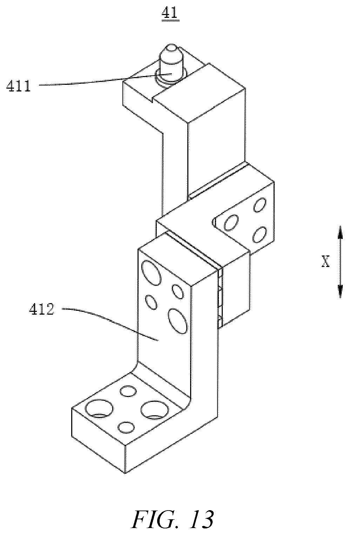

According to some embodiments of the present application, optionally, as shown in FIGS. 1, 2 and 13, the frame positioning mechanism 4 comprises a first positioning mechanism 41. The first positioning mechanism 41 comprises a positioning pin 411, the positioning pin 411 extends in a thickness direction of the covering member 2, the first positioning mechanism 41 is arranged in the base 3 by means of a first mounting base 412, and the positioning pin 411 fits with a through hole in the frame 1 to achieve positioning for the frame 1.

The first direction X as shown is the thickness direction of the covering member 2.

The first positioning mechanism further comprises the first mounting base 412, an outer wall of the frame 1 is provided with a connecting portion 10 for connecting other components, the connecting portion 10 is provided with a through hole through which a fastener (e.g., a screw or a bolt) passes, and the positioning pin 411 may pass through or be pulled out of the through hole in the connecting portion 10.

A plurality of first positioning mechanisms 41 may be provided, and the plurality of first positioning mechanisms 41 are arranged at intervals around the placement region.

In the process of placing the frame 1 in the placement region, the through hole in the frame 1 fits with the positioning pin 411 to restrict the movement of the frame 1 in the second direction Y or in the third direction Z so as to provide initial positioning for the frame 1, and then the frame 1 comes into contact with the placement region of the base 3.

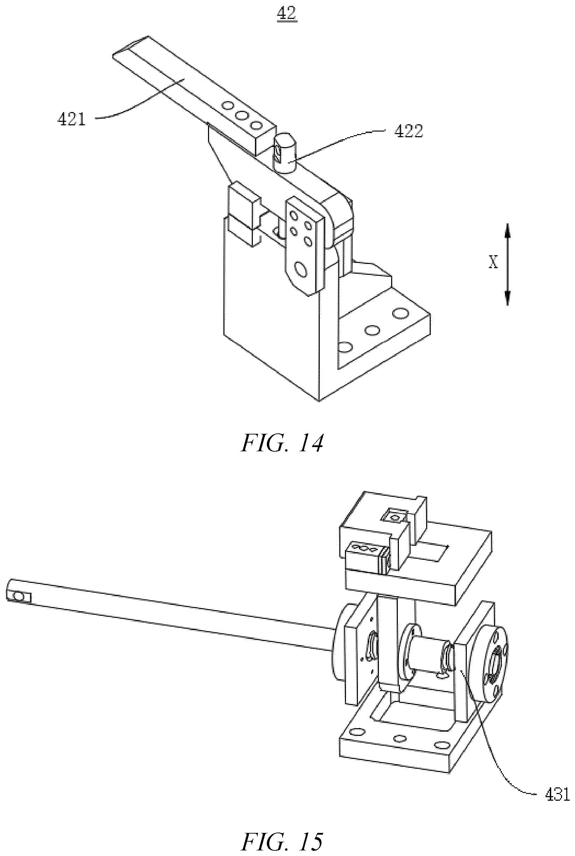

According to some embodiments of the present application, optionally, as shown in FIGS. 1, 2 and 14, the frame positioning mechanism 4 comprises a second positioning mechanism 42. The second positioning mechanism 42 comprises a pressing member 421 and a locking member 422, the pressing member 421 being rotatably connected to the base 3, the pressing member 421 being configured to switch between a pressing position and a release position, and the locking member 422 being configured to lock the pressing member 421 in the pressing position to allow the pressing member 421 to press the frame 1 against the base 3.

The pressing member 421 may be a pressing arm, one end of which is rotatably connected to the base 3. After the frame 1 is placed in the placement region, the pressing arm is turned over so that the other end of the pressing arm is pressed against the top surface of the frame 1. The locking member 422 may be a positioning bolt, and the base 3 is provided with a threaded hole adapted to the positioning bolt. When the pressing arm is in the pressing position, the positioning bolt is in threaded fit with the threaded hole to lock the pressing arm in the state of pressing the frame 1. After the welding is completed, the positioning bolt is disengaged from the bolt hole, the pressing arm is turned away from the frame 1, and the pressing arm is switched from the pressing position to the release position.

A plurality of second positioning mechanisms 42 may be provided, and the plurality of second positioning mechanisms 42 are arranged at intervals around the placement region to press the frame 1 against the base 3.

The pressing member 421 is turned over to press the frame 1 against the base 3 to restrict the movement of the frame 1 in the first direction X and further provide positioning for the frame 1 placed in the placement region.

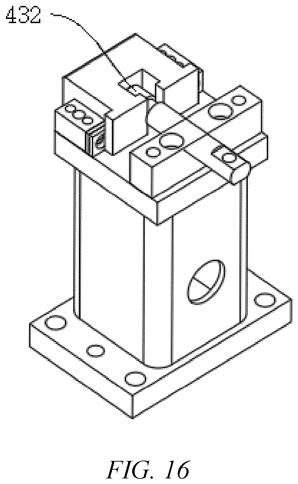

According to some embodiments of the present application, optionally, as shown in FIGS. 2, 15 and 16, the frame positioning mechanism 4 comprises a third positioning mechanism 43. The third positioning mechanism 43 comprises an inner holding member 431 and an outer holding member 432, the inner holding member 431 being configured to press the frame 1 from the inner periphery of the frame 1, and the outer holding member 432 being configured to press the frame 1 from the outer periphery of the frame 1.

The inner holding member 431 is arranged on the inner side of the frame 1 located in the placement region, and the outer holding member 432 is arranged on the outer side of the frame 1 located in the placement region.

A plurality of third positioning mechanisms 43 may be provided, and the plurality of third positioning mechanisms 43 are arranged at intervals around the placement region to position the frame 1.

The inner holding member 431 moves towards the frame 1 and comes into contact with an inner wall of the frame 1, and the outer holding member 432 moves towards the frame 1 and comes into contact with the outer surface of the frame 1, the direction of movement of the inner holding member 431 being in the same line as the direction of movement of the outer holding member 432.

The inner holding member 431 and the outer holding member 432 move towards the frame 1 so as to clamp the frame 1, so that the frame 1 is fixed in the placement region in position.

When the through hole in the frame 1 fits with the positioning pin 411, the frame 1 is placed in the placement region, and the frame 1 is initially positioned by means of the first positioning mechanism 41. The pressing member 421 is turned over to press the frame 1 against the base 3, and the locking member 422 locks the pressing member 421, so as to fix the frame 1 to the base 3 to restrict the movement of the frame 1 in the first direction X. The inner holding member 431 and the outer holding member 432 move towards the frame 1 so as to clamp the frame 1, so as to fix the frame 1 on the base 3 in position to restrict the movement of the frame 1 in the second direction Y or in the third direction Z.

According to some embodiments of the present application, optionally, the covering member 2 is a water cooling plate.

The water cooling plate is a component for controlling the temperature of the battery cell inside the case, and the inner side of the water cooling plate is provided with a water channel through which water passes.

When the battery is in a low temperature environment, the delivery of high-temperature water into the water channel of the water cooling plate can increase the temperature of the battery cell, so that the temperature of the battery cell can be maintained at an operating temperature. When the battery is in a high temperature environment, the delivery of low-temperature water into the water channel of the water cooling plate can reduce the temperature of the battery cell, so as to reduce the risk of thermal runaway of the battery cell to improve the safety of the battery cell.

According to some embodiments of the present application, optionally, the present application further provides a welding device, comprising a welding fixture as described above and a welding execution unit which is configured to weld the covering member 2 to the frame 1.

According to some embodiments of the present application, optionally, as shown in FIGS. 1 to 16, the present application provides a welding fixture configured to fix a frame 1 and a covering member 2, the covering member 2 covering a first opening of the frame 1, and the covering member 2 being a water cooling plate. The welding fixture comprises a base 3, a frame positioning mechanism 4, a negative pressure suction mechanism 5 and a heating mechanism 6. The base 3 comprises a placement region in which the frame 1 is placed, and the frame positioning mechanism 4 is arranged on the base 3 and configured to position the frame 1. The frame positioning mechanism 4 comprises a first positioning mechanism 41, a second positioning mechanism 42 and a third positioning mechanism 43. The first positioning mechanism 41 comprises a positioning pin 411 that can pass through a through hole in the frame 1 to restrict the movement of the frame 1. The second positioning mechanism 42 comprises a pressing member 421 for pressing the frame 1 against the base 3. The third positioning mechanism 43 comprises an inner holding member 431 for pressing the frame 1 from the inner side of the frame 1 and an outer holding member 432 for pressing the frame 1 from the outer side of the frame 1. The negative pressure suction mechanism 5 is arranged in the placement region. The negative pressure suction mechanism 5 comprises a plurality of first negative pressure suction units 51 and a plurality of second negative pressure suction units 52. The plurality of second negative pressure suction units 52 are arranged at intervals surrounding the center of the placement region, some of the plurality of first negative pressure suction units 51 are arranged surrounding the plurality of second negative pressure suction units 52, and the other of the plurality of first negative pressure suction units 51 are staggered with the plurality of second negative pressure suction units 52. The first negative pressure suction unit 51 is a bowl-shaped suction cup 511, and the second negative pressure suction unit 52 is a square suction cup 521. A heating mechanism 6 is arranged in the placement region and configured to heat the covering member 2. The heating mechanism 6 comprises heating plates 61. The heating plate 61 is made of silica gel, and the heating plate 61 is arranged in the placement region by means of a height-adjustable first holder 62. A plurality of heating plates 61 are provided, and the plurality of heating plates 61 are arranged surrounding the center of the placement region. The heating mechanism 6 further comprises a plurality of hot air blowers 64, and the bottom surface of the covering member 2 that is not attached to the heating plate 61 is heated by means of the plurality of hot air blowers 64.

The present application further provides a welding device, comprising a welding fixture as described above and a welding execution unit. The welding execution unit is a stirring head for use in a FSW (Friction Stir Welding) process. The welding execution unit is rotationally inserted into the welding part between the frame 1 and the covering member 2, the friction between the welding execution unit and the frame 1 and the covering member 2 generates frictional heat to allow the frame 1 and the covering member 2 to undergo a thermoplasticizing process to achieve plastic flowing, and then solid-phase bonding is formed behind the welding execution unit under the upset-forging action of a stirring shaft shoulder.

The covering member 2 is sucked by means of the negative pressure suction mechanism 5, so that the covering member 2 is fixed in position, and the suction force acts uniformly on the sucked surface of the covering member 2, thus reducing the risk of damage to the covering member 2 due to excessively concentrated stress. A plurality of first negative pressure suction units 51 pull the covering member 2 towards the frame 1 by the suction force, so that the covering member 2 is in close contact with the welding region of the frame 1, and then the second negative pressure suction unit 52 provides larger suction force for the covering member 2 to fix the covering member 2 in position, thus reducing the risk of displacement of the covering member 2 during welding. The covering member 2 is heated by means of the heating mechanism 6, the covering member 2 has volume expansion as it heats up, specifically, the edge of the covering member 2 extends in its own width and length directions, and then the frame 1 is welded to the volumetrically expanded covering member 2. After the welding is completed, the heating mechanism 6 stops heating, and as the temperature of the covering member 2 decreases, the covering member 2 tends to shrink. Since the edge of the covering member 2 has been welded to the frame 1, the shrinkage force of the covering member 2 acts on the central portion of the covering member 2 to stretch the central portion of the covering member 2 towards the edge of the covering member 2, so that the central portion of the covering member 2 is flattened ,thus improving the overall flatness of the covering member 2.

Although the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A welding fixture configured to fix a frame and a covering member which covers a first opening of the frame, the welding fixture comprising:
a base comprising a placement region in which the frame is placed;
a frame positioning mechanism arranged on the base and configured to position the frame; and
a negative pressure suction mechanism arranged in the placement region and configured to generate negative pressure to suck the covering member so as to press the covering member against the frame.

2. The welding fixture according to claim 1, wherein the negative pressure suction mechanism comprises first negative pressure suction units and second negative pressure suction units, the number of the first negative pressure suction units being greater than that of the second negative pressure suction units, and the suction area of the first negative pressure suction unit being smaller than that of the second negative pressure suction unit.

3. The welding fixture according to claim 2, wherein the plurality of first negative pressure suction units are arranged at intervals around the second negative pressure suction units.

4. The welding fixture according to claim 2 or 3, wherein the first negative pressure suction unit is a bowl-shaped suction cup, and the second negative pressure suction unit is a square suction cup.

5. The welding fixture according to any one of claims 1-4, further comprising:
a heating mechanism arranged in the placement region and configured to heat the covering member.

6. The welding fixture according to claim 5, wherein the heating mechanism comprises a heating plate, which comprises an elastic insulation layer and an electric heating wire embedded in the elastic insulation layer and is configured to be attached to the covering member for heating the covering member.

7. The welding fixture according to claim 6, wherein the elastic insulation layer is made of silica gel.

8. The welding fixture according to claim 6 or 7, wherein the heating mechanism comprises the plurality of heating plates arranged in the same plane and spaced apart from each other.

9. The welding fixture according to any one of claims 6-8, wherein the heating mechanism further comprises a height-adjustable first holder arranged in the placement region and configured to support the heating plate.

10. The welding fixture according to any one of claims 5-9, wherein the heating mechanism further comprises a hot air blower configured to blow hot air to the covering member.

11. The welding fixture according to any one of claims 1-10, wherein the frame positioning mechanism comprises a first positioning mechanism comprising a positioning pin which extends in a thickness direction of the covering member and fits with a through hole in the frame to achieve positioning for the frame.

12. The welding fixture according to any one of claims 1-11, wherein the frame positioning mechanism comprises a second positioning mechanism comprising a pressing member and a locking member, the pressing member being rotatably connected to the base and configured to switch between a pressing position and a release position, and the locking member being configured to lock the pressing member in the pressing position to allow the pressing member to press the frame against the base.

13. The welding fixture according to any one of claims 1-12, wherein the frame positioning mechanism comprises a third positioning mechanism comprising an inner holding member and an outer holding member, the inner holding member being configured to press the frame from the inner periphery of the frame, and the outer holding member being configured to press the frame from the outer periphery of the frame.

14. The welding fixture according to any one of claims 1-13, wherein the covering member is a water cooling plate.

15. A welding device, comprising:
a welding fixture according to any one of claims 1-14; and
a welding execution unit configured to weld the covering member to the frame.
